# EUROPÄISCHE PATENTSCHRIFT

(11) **EP 3 191 739 B1**
(45) Veröffentlichungstag und Bekanntmachung des Hinweises auf die Patenterteilung: **10.06.2020**
(21) Anmeldenummer: 15762555.9
(22) Anmeldetag: 09.09.2015
(51) Int. Cl.: F16H 57/021, F16H 63/30

(54) **ZWISCHENRADANORDNUNG FÜR EIN KRAFTFAHRZEUGGETRIEBE**
IDLER GEAR ARRANGEMENT FOR A MOTOR VEHICLE TRANSMISSION
ENSEMBLE DE PIGNON INTERMÉDIAIRE POUR UNE BOÎTE DE VITESSES DE VÉHICULE AUTOMOBILE

(30) Priorität: 12.09.2014 DE 102014218311
(43) Veröffentlichungstag der Anmeldung: 19.07.2017
(73) Patentinhaber: Volkswagen Aktiengesellschaft, 38440 Wolfsburg (DE)
(72) Erfinder: MÜLLER, Frank, 38165 Essenrode (DE)
(86) Internationale Anmeldenummer: PCT/EP2015/070534
(87) Internationale Veröffentlichungsnummer: WO 2016/038057

(56) Entgegenhaltungen:
- DE-A1- 2 924 004
- DE-A1- 4 121 774
- GB-A- 2 109 486
- US-A- 5 046 592

## Beschreibung

Die Erfindung betrifft eine Zwischenradanordnung für ein Kraftfahrzeuggetriebe, mit den Merkmalen des Oberbegriffs des Patentanspruchs 1.

Aus der EP 1 639 275 B1 ist eine Zwischenradanordnung für ein Kraftfahrzeuggetriebe bekannt. Das Kraftfahrzeuggetriebe weist eine Getriebeeingangswelle und zwei Getriebeausgangswellen auf. Die beiden Getriebeausgangswellen stehen jeweils mit einem Achsdifferential in Verbindung. Zur Drehrichtungsumkehr ist nun einem Rückwärtsgang ein Rückwärtsgangzwischenrad zugeordnet. Das Rückwärtsgangzwischenrad ist auf einer Getriebeachse gelagert. Die Zwischenradanordnung weist ein Getriebegehäuse auf, wobei die dem Zwischenrad zugeordnete Getriebeachse in dem Getriebegehäuse befestigt ist. Es ist nun ein Zwischenradhalter in Form eines Lagerbocks vorgesehen, wobei die Getriebeachse an ihrem einen Ende in den Lagerbock drehfest eingesteckt ist. Der Lagerbock ist in eingebautem Zustand in der Getriebeachse mit Hilfe einer sich radial erstreckenden Schraube innerhalb des Getriebegehäuses befestigt. Das andere Ende der Getriebeachse ist in einem Getriebegehäusedeckel aufgenommen. Der Lagerbock weist eine kreisbogenförmig ausgebildete Außenkontur auf, die im eingebauten Zustand in einer Ausnehmung des Getriebegehäuses angeordnet ist. Die Innenkontur der Ausnehmung ist ebenfalls kreisbogenförmig ausgebildet und der Außenkontur des Lagerbocks angepasst. In der kreisbogenförmig ausgebildeten Außenkontur ist einerseits ein Gewinde zur Aufnahme einer entsprechenden Schraube angebracht, andererseits ist seitlich versetzt zu einer Gewindebohrung ein Führungspin vorgesehen, der in einer im Getriebegehäuse ausgebildeten, zweiten Ausnehmung geführt ist. Die Ausnehmung und der Führungspin sind so dimensioniert bzw. so ausgerichtet, dass der Führungspin am Ende der konisch verlaufenden Ausnehmung anschlägt, wenn die Gewindebohrung mit der im Getriebegehäuse vorgesehenen Öffnung zur Aufnahme der Schraube in Überdeckung ist. Damit soll eine selbstfindende Position zur Befestigung des Lagerbocks zur Getriebeachse im Getriebegehäuse erreicht werden. Zwischen dem Zahnrad und dem Lagerbock ist die Getriebeachse mit einem größeren Achsdurchmesser versehen, der als axiale Anlagefläche für das Zahnrad dient.

Aus der gattungsbildenden DE 198 11 874 A1 ist eine Zwischenradanordnung für ein Kraftfahrzeuggetriebe bekannt. Die Zwischenradanordnung weist ein Gehäuse in Form eines Getriebegehäuses mit einer Stirnwand und einer Seitenwand auf. An der Stirnwand ist eine Zwischenachse angeordnet. Die Zwischenachse trägt ein Rückwärtsgangzwischenrad. Das Rückwärtsgangzwischenrad steht im kämmenden Eingriff mit einem Rückwärtsgang-Antriebsrad und einem Rückwärtsgang-Hauptrad. Die Stirnwand weist eine erste Durchgangsbohrung auf, die das Einschieben der Zwischenachse in das Getriebegehäuse ermöglicht. Von der Seitenwand erstreckt sich eine Innenwand radial nach innen. Diese Innenwand ist wie die Seitenwand von der Stirnwand beabstandet. In der Innenwand ist eine zweite Durchgangsbohrung ausgebildet, die koaxial zur ersten Durchgangsbohrung angeordnet ist. Zwischen der ersten Durchgangsbohrung und der zweiten Durchgangsbohrung ist ein Zwischenraum vorhanden. Die Zwischenachse weist Endabschnitte auf, die in der ersten Durchgangsbohrung bzw. in der zweiten Durchgangsbohrung aufgenommen sind, so dass sich in dem Zwischenraum ein mittlerer Achsabschnitt befindet, an dem das Rückwärtsgangzwischenrad drehbar angebracht ist. Die Innenwand dient somit als Zwischenradhalter. Der Hauptwelle sind mehrere Zahnräder zugeordnet, die als Losräder ausgebildet sind. Zwischen zwei Losrädern ist eine Synchroneinrichtung angeordnet, die durch eine axial verschiebbare Schaltschiene mit einer entsprechenden Schaltgabel betätigt wird. Durch die Synchroneinrichtung ist das entsprechende Losrad drehfest mit der Hauptwelle verbindbar.

Die gattungsbildende Zwischenradanordnung ist noch nicht optimal ausgebildet. Zur Schaltung von unterschiedlichen Gangstufen sind entsprechende Losräder auf Wellen drehbar angeordnet. Diese Losräder sind mit entsprechenden Synchronisiereinrichtungen drehfest mit den Wellen verbindbar. Die Synchronisiereinrichtungen werden dabei mittels Schaltgabeln betätigt, wobei die Schaltgabeln mittels Schaltschienen axial verschiebbar sind. Zum Verschieben der Schaltschienen sind dabei Schaltzylinder und darin verschiebbar angeordnete Schaltkolben vorgesehen, wobei die Schaltkolben mit den Schaltschienen zusammenwirken. Der Abstand der Schaltschienen zu den entsprechenden Wellen ist noch nicht optimal, so dass insbesondere größere Lagerkräfte auftreten könnten.

Der Erfindung liegt daher auch die Aufgabe zugrunde, die Zwischenradanordnung derart auszugestalten und weiterzubilden, so dass ein erhöhter Bauraumbedarf und größere Lagerkräfte vermieden sind.

Diese der Erfindung zugrunde liegende Aufgabe wird nun durch eine Zwischenradanordnung mit den Merkmalen des Patentanspruches 1 gelöst. Der Zwischenradhalter weist einen ersten Schaltzylinder auf, wobei in dem ersten Schaltzylinder ein Schaltkolben zum Verschieben einer Schaltschiene verschiebbar angeordnet ist. Hierdurch ist eine kompakt bauende Zwischenradanordnung mit einer entsprechenden Schaltschiene realisierbar. Dies hat den Vorteil, dass der Abstand der Schaltschienen zu den Wellen verringerbar ist und hierdurch die auftretenden Lagerkräfte verringert werden können. Da der Schaltzylinder und der Schaltkolben nun näher an die Mitte der entsprechenden Welle angeordnet sind, ist der Bauraum besser ausgenutzt und es ist denkbar, größere Zahnräder zur Nutzung des frei gewordenen Bauraums zu verwenden. Es kann eine kürzere Schaltgabel verwendet werden. Mittels der verschiebbaren Schaltschiene ist eine Synchroneinrichtung betätigbar. Diese Synchroneinrichtung ist einer Triebwelle zugeordnet, auf der mindestens ein insbesondere mehrere Losräder angeordnet sind. Die Losräder sind mittels der Synchroneinrichtung drehfest mit der Triebwelle, oder mit einem anderen Losrad bzw. Loswelle, verbindbar. Die Synchroeinrichtung ist nicht so eng zu interpretieren, dass sie Reibkupplungen zum Abremsen der rotierenden Teile beinhalten muss, es kann z. B. auch eine Klauenkupplung sein. Der Zwischenradhalter kann auch als Rückwärtsgang-Lagerbrille bezeichnet werden.

Der erste Schaltkolben ist insbesondere Teil eines Schaltkolbenpaares. Es ist nun ein zweiter Schaltzylinder vorgesehen, der dem ersten Schaltzylinder gegenüberliegt. In dem zweiten Schaltzylinder ist ein zweiter Schaltkolben des Schaltkolbenpaares verschiebbar angeordnet, so dass diese beiden entgegengesetzt wirkenden Schaltkolben durch wechselseitige Druckbeaufschlagung zum Ein- und Auslegen der entsprechenden Gangstufen verschiebbar sind. Die beiden Schaltkolben wirken mit der Schaltschiene zusammen. In besonders einfacher Ausgestaltung können die Schaltkolben an den Enden der Schaltschiene angeordnet sein. Die Synchroneinrichtungen sind insbesondere doppeltwirkend ausgebildet, so dass jeweils ein Gangpaar mittels der entsprechenden Synchroneinrichtung betätigbar ist. Der dem Zwischenradhalter zugeordnete Schaltzylinder dient in einer Ausgestaltung nicht zur Betätigung des Rückwärtsganges. Es sind jedoch auch Ausgestaltungen denkbar, in denen der dem Zwischenradhalter zugeordnete Schaltzylinder zur Betätigung des Rückwärtsganges dient. Weiterhin sind Anordnungen mit zwei koaxialen Zwischenrädern denkbar, die mittels einer Synchroeinrichtung drehfest verbindbar sind, wobei diese Synchroeinrichtung entweder mittels des dem Zwischenradhalter zugeordneten oder eines anderen Schaltzylinders betätigt werden kann.

Das erste Gehäuse ist vorzugsweise als Kupplungsgehäuse ausgebildet. Der Zwischenradhalter ist insbesondere mit dem Kupplungsgehäuse verbunden. Diese Verbindung kann über eine Schraubverbindung erfolgen. Die Schraubverbindung kann sich insbesondere koaxial zum Zwischenrad erstrecken. Zwischen dem ersten Gehäuse und dem Zwischenradhalter ist insbesondere eine Lagerhülse angeordnet, wobei die Schraubverbindung die Lagerhülse durchgreift und das Zwischenrad auf der Lagerhülse gelagert ist.

Der Zwischenradhalter ist dabei zwischen dem ersten Gehäuse - vorzugsweise in Form eines Kupplungsgehäuses - und einem zweiten Gehäuse - vorzugsweise in Form eines Getriebegehäuses - angeordnet. Diese beiden Gehäuse begrenzen einen Innenraum, in dem das Zwischenrad und weitere entsprechende Zahnräder angeordnet sind. Der zweite Schaltzylinder kann in dem Kupplungsgehäuse angeordnet sein. In alternativer Ausgestaltung kann der zweite Schaltzylinder am Getriebegehäuse oder an einem separaten, mit einem der Gehäuse verbundenen Bauteil, beispielsweise einer Ölpumpe, ausgebildet sein.

In bevorzugter Ausgestaltung ist die Schaltschiene mittels der Schaltkolben verschiebbar gelagert und/oder geführt. Es ist jedoch denkbar, alternativ die Lagerung der Schaltschienen separat, d.h. unabhängig von der Anordnung der Schaltkolben, auszugestalten.

Der Zwischenradhalter kann zumindest mit einem Druckmittelkanal ausgestattet sein. Ein erster Druckmittelkanal dient zur Versorgung des ersten Schaltzylinders im Zwischenradhalter. Der erste Druckmittelkanal mündet in den ersten Schaltzylinder. Der Zwischenradhalter weist insbesondere noch einen zweiten Druckmittelkanal auf, wobei der zweite Druckmittelkanal zur Druckmittelversorgung von weiteren Druckräumen dient. Der erste und der zweite Druckmittelkanal sind über je eine Druckmittelleitung mit einer Druckmittelzufuhr funktional wirksam verbunden. Als Druckmittelzufuhr kann hier eine Mechatronikeinheit dienen. Durch den zweiten Druckmittelkanal kann vorzugsweise ein Schaltzylinder im ersten Gehäuse bzw. im Getriebegehäuse mit dem Druckmittel versorgt werden. Der Zwischenradhalter dient somit als Druckmittelverbindung zwischen der Mechatronikeinheit und dem Kupplungsgehäuse. Zur einfachen Druckmittelversorgung des ersten Schaltzylinders im Zwischenradhalter, kann in dem zweiten Gehäuse ein weiterer Druckmittelkanal ausgebildet sein, wobei der weitere Druckmittelkanal über eine Druckmittelleitung mit dem ersten Druckmittelkanal im Zwischenradhalter verbunden ist. Es ist denkbar, dass die Druckmittelkanäle direkt mit der Druckmittelversorgung verbunden sind, anstatt die Druckmittelkanäle über zusätzliche Druckmittelleitungen mit der Druckmittelversorgung zu verbinden.

Am ersten Gehäuse bzw. am Kupplungsgehäuse und am zweiten Gehäuse bzw. am Getriebegehäuse sind weitere, sich gegenüberliegende Schaltzylinder ausgebildet, wobei in diesen Schaltzylindern Schaltkolben von weiteren Schaltkolbenpaaren verschiebbar angeordnet sind.

Um nun die Lage der Schaltschiene zu bestimmen, ist vorzugsweise zwischen dem ersten Gehäuse und dem Zwischenradhalter eine Lagesensoreinrichtung angeordnet. Die Lagesensoreinrichtung kann einen Magnetsensor, insbesondere einen Hall-Sensor, aufweisen, wobei der Sensor die Lage einer metallischen und/oder magnetischen Positionsmarke an der Schaltschiene detektiert. Die Positionsmarke kann als Positionsstift ausgebildet sein. Wenn die Raststelle erreicht ist, erfolgt eine entsprechende rastende Verbindung bzw. Arretierung der Schaltschiene. Alternativ kann die Schaltschiene mit einem Magneten ausgerüstet sein, wobei die Lagesensoreinrichtung das Magnetfeld des Magneten erfasst. Anhand des Magnetfeldes wird daraufhin die Lage der Schaltschiene bestimmt.

Vorzugsweise ist an dem Zwischenradhalter eine Arretierungseinrichtung für eine der Schaltschienen angebracht oder ausgebildet. Die Arretierungseinrichtung kann mit der dem Zwischenradhalter zugeordneten Schaltschiene zusammenwirken. Alternativ kann die Arretierungseinrichtung mit einer anderen Schaltschiene zusammenwirken. Die Arretierungseinrichtung kann dabei eine Rastierungshülse und ein federbelastetes Rastelement aufweisen, wobei in der Rastierungshülse ein entsprechendes Federmittel angeordnet ist, das an seinem freien Ende das Rastelement trägt. Der Schaltschiene ist dabei eine Rastkurve mit einer Raststelle zugeordnet, wobei das Rastelement beim Verschieben der Schaltschiene an der Rastkurve entlang geführt ist.

Im Ergebnis sind die eingangs genannten Nachteile daher vermieden und entsprechende Vorteile erzielt.

Es gibt nun eine Vielzahl von Möglichkeiten, die erfindungsgemäße Zwischenradanordnung auszugestalten und weiterzubilden. Hierzu darf zunächst auf die dem Patentanspruch 1 nachgeordneten Patentansprüche verwiesen werden. Im Folgenden wird eine bevorzugte Ausgestaltung der Zwischenradanordnung anhand der Zeichnung und der dazugehörigen Beschreibung näher erläutert. In der Zeichnung zeigt:
Fig. 1 in einer schematischen geschnittenen Darstellung eine Zwischenradanordnung mit einem Zwischenradhalter und mit einem Zwischenrad, die zwischen zwei Gehäusen angeordnet sind, und
Fig. 2 in einer schematischen, geschnittenen Detaildarstellung die Verbindung des Zwischenradhalters mit dem ersten Gehäuse ohne das Zwischenrad.

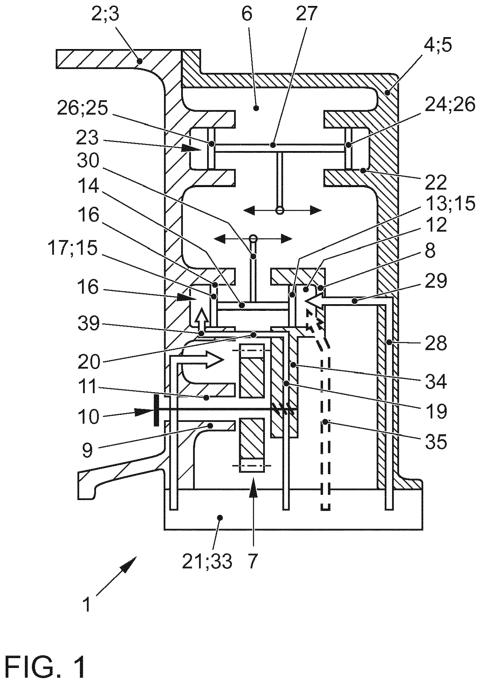

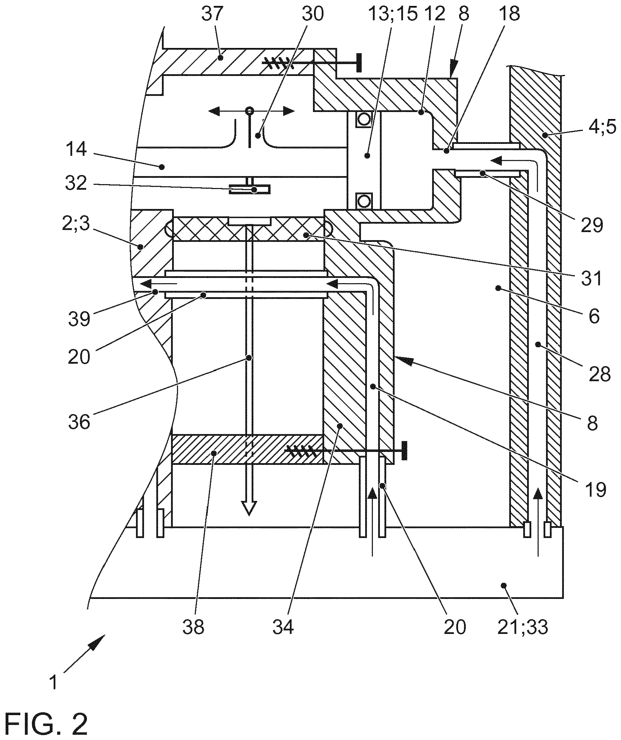

In Fig. 1 und 2 ist eine Zwischenradanordnung 1 für ein Kraftfahrzeug zu erkennen. Die Zwischenradanordnung 1 weist ein erstes Gehäuse 2 auf. Das Gehäuse 2 ist insbesondere als Kupplungsgehäuse 3 ausgebildet. Mit dem ersten Gehäuse 2 ist ein zweites Gehäuse 4 verbunden. Das zweite Gehäuse 4 ist Teil eines Getriebegehäuses 5. Die beiden Gehäuse 2, 4 bilden hier jeweils eine Gehäusehälfte und einen Räderkasten (nicht näher bezeichnet). In einem von den beiden Gehäusen 2, 4 zumindest teilweise begrenzten Innenraum 6 sind nun mehrere Zahnräder angeordnet.

Die Zwischenradanordnung 1 weist ein Rückwärtsgangzwischenrad 7 und einen Zwischenradhalter 8 auf. Das Rückwärtsgangzwischenrad 7 steht im kämmenden Eingriff mit zwei nicht dargestellten Zahnrädern, insbesondere einem Losrad und einem Festrad, wobei die beiden Zahnräder an entsprechenden Wellen des Getriebes angeordnet sind. Die beiden Zahnräder sind einem Rückwärtsgang zugeordnet, wobei mittels des Rückwärtsgangzwischenrads 7 eine Drehrichtungsumkehr an einer Triebwelle realisiert ist. Das Losrad kann dabei an der Triebwelle angeordnet sein. Das Losrad ist mittels einer Synchronisiereinrichtung drehfest mit der entsprechenden Welle verbindbar (nicht dargestellt).

Der Zwischenradhalter 8 kann auch als Rückwärtsgangzwischenradhalter oder als "Rückwärtsgangbrille" bezeichnet werden. Der Zwischenradhalter 8 ist insbesondere mit dem ersten Gehäuse 2 verbunden. Das Kupplungsgehäuse 2 weist einen Kupplungsdom 9 auf. In der dargestellten Ausgestaltung ist der Zwischenradhalter 8 mit dem Kupplungsdom 9 verbunden. Diese Verbindung erfolgt mittels einer Schraubverbindung, wobei eine Befestigungsschraube 10 durch eine entsprechende Öffnung 11 im Kupplungsgehäuse 3, nämlich im Kupplungsdom 9, hindurchreicht. Die Befestigungsschraube 10 durchgreift ferner eine nicht dargestellte Lagerhülse, wobei das Rückwärtsgangzwischenrad 7 auf der Lagerhülse zentriert und gelagert ist. Die Schraubverbindung erstreckt sich koaxial zum Rückwärtsgangzwischenrad 7 und ist von der dem Rückwärtsgangzwischenrad 7 abgewandten Seite des Kupplungsgehäuses 3 aus montierbar. Das Rückwärtsgangzwischenrad 7 ist zwischen dem ersten Gehäuse 2 und dem Zwischenradhalter 8 angeordnet. Eine Wandung 34 des Zwischenradhalters 8 weist ein entsprechendes Gewinde auf, in das die Befestigungsschraube 10 eingedreht ist.

Eine Schaltschiene 14 dient zum Verschieben einer Schaltgabel 30, mit der eine Synchronisiereinrichtung (nicht dargestellt) betätigbar ist. Diese Synchronisiereinrichtung ist vorzugsweise doppeltwirkend ausgestaltet und zwei Gangstufen zugeordnet. Eine der Gangstufen kann der Rückwärtsgang sein. In alternativer Ausgestaltung kann die Synchronisiereinrichtung nicht dem Rückwärtsgang, sondern einem oder zwei Vorwärtsgänge zugeordnet sein.

Die eingangs genannten Nachteile sind nun dadurch vermieden, dass der Zwischenradhalter 8 einen ersten Schaltzylinder 12 aufweist, wobei in dem ersten Schaltzylinder 12 ein erster Schaltkolben 13 verschiebbar angeordnet ist und wobei der Schaltkolben 13 mit der Schaltschiene 14 zusammenwirkt. Der Schaltkolben 13 ist an einem Ende der Schaltschiene 14 angeordnet. Dadurch dass der Schaltzylinder 12 in den Zwischenradhalter 8 integriert ist, kann der radiale Abstand der Schaltschiene 14 zu der entsprechenden Welle verringert werden. Es kann eine kürzere Schaltgabel 30 verwendet werden. Hierdurch sind die auf die Schaltschiene 14 wirkenden Kräfte reduziert.

Der erste Schaltkolben 13 ist Teil eines Schaltkolbenpaares 15, wobei in dem ersten Gehäuse 2 ein zweiter Schaltzylinder 16 ausgebildet ist. Alternativ könnte der zweite Schaltzylinder 16 in dem Getriebegehäuse 5 oder einem separaten Bauteil, bspw. einem Ölpumpengehäuse, ausgebildet sein. Dem Schaltkolbenpaar 15 ist ein zweiter Schaltkolben 17 zugeordnet, wobei der zweite Schaltkolben 17 in dem zweiten Schaltzylinder 16 verschiebbar angeordnet ist. Die beiden Schaltkolben 13, 17 sind an den Enden der Schaltschiene 14 angeordnet. Die beiden Schaltkolben 13, 17 wirken entgegengesetzt. Durch wechselseitige Druckbeaufschlagung der Schaltzylinder 12, 16 ist die Schaltschiene 14 zum Ein- und Auslegen der entsprechenden Gangstufen verschiebbar. Vorzugsweise ist die Schaltschiene 14 mittels der beiden Schaltkolben 13, 17 in den beiden Schaltzylindern 12, 16 geführt. Es ist jedoch auch denkbar, dass ein separates Führungsmittel zur Führung und/oder Lagerung der Schaltschiene 14 vorgesehen ist. Der Schaltzylinder 12 schließt sich an die Wandung 34 des Zwischenradhalters 8 an, wobei die Wandung 34 sich im Bereich des Rückwärtsgangzwischenrads 7 erstreckt.

Der Zwischenradhalter 8 weist einen ersten Druckmittelkanal 18 auf, wobei der erste Druckmittelkanal 18 in den ersten Schaltzylinder 12 mündet. Der erste Druckmiitelkanal 18 erstreckt sich hier axial im nicht näher bezeichneten Boden des Schaltzylinders 12. Im zweiten Gehäuse 2 ist ein weiterer Druckmittelkanal 28 ausgebildet, wobei der weitere Druckmittelkanal 28 über eine sich axial erstreckende Druckmittelleitung 29 mit dem ersten Druckmittelkanal 18 im Zwischenradhalter 8 verbunden ist. Alternativ könnte eine Druckmittelleitung 35 (in Fig. 1 gestrichelt angedeutet) zur Versorgung des ersten Schaltzylinders 12 vorgesehen sein, wobei die Druckmittelleitung 35 den ersten Schaltzylinder 12 direkt mit einer Druckmittelzufuhr 21 verbindet.

Der Zwischenradhalter 8 weist mindestens einen zweiten Druckmittelkanal 19 auf. Der zweite Druckmittelkanal 19 erstreckt sich in der Wandung 34. Der zweite Druckmittelkanal 19 ist radial über eine Druckmittelleitung 20 mit der Druckmittelzufuhr 21 in Form einer Mechatronikeinheit 33 verbunden. Dabei ist eine sich axial erstreckende Druckmittelleitung 20 zwischen dem Zwischenradhalter 8 und dem ersten Gehäuse 2 angeordnet, wobei diese Druckmittelleitung 20 in einen Druckmittelkanal 39 im ersten Gehäuse 2 mündet. Dieser Druckmittelkanal 39 erstreckt sich bis zum zweiten Schaltzylinder 16. Der zweite Druckmittelkanal 19 dient damit zur Beaufschlagung des zweiten Schaltzylinders 16 mit dem Druckmittel, insbesondere einem Öl. Die Druckmittelleitungen 20, 29 sind als Rohre ausgestaltet. Es ist denkbar, dass die Druckmittelzufuhr 21 bzw. die Mechatronikeinheit 33 nicht über entsprechende Druckmittelleitungen 20, 29, sondern direkt an die Druckmittelkanälen 19, 28 angebunden ist.

Am ersten und zweiten Gehäuse 2, 4 sind weitere, sich gegenüberliegende Schaltzylinder 22, 23 ausgebildet, wobei in den weiteren Schaltzylindern 22, 23 weitere Schaltkolben 24, 25 zumindest eines weiteren Schaltkolbenpaares 26 verschiebbar angeordnet sind. Die entsprechenden Druckmittelkanäle in den Gehäusen 2, 4 sind dabei jedoch nicht dargestellt.

Zwischen dem ersten Gehäuse 2 und dem Zwischenradhalter 8 ist eine Lagesensoreinrichtung 31 zur Lagebestimmung der Schaltschiene 14 angeordnet. Hierzu kann die Schaltschiene 14 mit einer Positionsmarke 32 - bspw. in Form eines Magneten oder eines magnetischen oder magnetisierbaren Positionsstifts -ausgerüstet sein, wobei die Lagesensoreinrichtung 31 mit einem Magnetfeldsensor, vorzugsweise einem Hall-Sensor (nicht näher dargestellt), das Magnetfeld der Positionsmarke 32 erfasst. Anhand des Magnetfeldes wird daraufhin die Lage der Schaltschiene 14 bestimmt.

In Fig. 2 ist ferner zu erkennen, dass der Zwischenradhalter 8 zusätzlich mit zwei Verbindungsstegen 37, 38 über eine Schraubverbindung verbunden ist. Der Verbindungssteg 37 ist einstückig mit dem ersten Gehäuse 2 ausgebildet und mit dem Zwischenradhalter 8 im Bereich des Arbeitszylinders 2 verbunden. Der Verbindungssteg 38 ist einerseits mit dem ersten Gehäuse 2 verbunden und andererseits am Ende der Wandung 34 mit dem Zwischenradhalter 8 verbunden.

An dem Zwischenradhalter 8 ist eine Arretierungseinrichtung (nicht dargestellt) für eine der Schaltschienen 14 angebracht. Die Arretierungseinrichtung kann ein federbelastetes Rastelement aufweisen, wobei die Schaltschiene eine Rastkurve aufweist, wobei das Rastelement beim Verschieben der Schaltschiene an der Rastkurve entlang geführt ist. Wenn die Raststelle erreicht ist, erfolgt eine entsprechende Arretierung der Schaltschiene 14.

### Bezugszeichenliste

- 1: Zwischenradanordnung
- 2: erstes Gehäuse
- 3: Kupplungsgehäuse
- 4: zweites Gehäuse
- 5: Getriebegehäuse
- 6: Innenraum
- 7: Rückwärtsgangzwischenrad
- 8: Zwischenradhalter
- 9: Kupplungsdom
- 10: Befestigungsschraube
- 11: Öffnung
- 12: erster Schaltzylinder
- 13: erster Schaltkolben
- 14: Schaltschiene
- 15: Schaltkolbenpaar
- 16: zweiter Schaltzylinder
- 17: zweiter Schaltkolben
- 18: Druckmittelkanal
- 19: Druckmittelkanal
- 20: Druckmittelleitung
- 21: Druckmittelzufuhr
- 22: weiterer Schaltzylinder
- 23: weiterer Schaltzylinder
- 24: weiterer Schaltkolben
- 25: weiterer Schaltkolben
- 26: weiteres Schaltkolbenpaar
- 27: weitere Schaltschiene
- 28: Druckmittelkanal
- 29: Druckmittelleitung
- 30: Schaltgabel
- 31: Lagesensoreinrichtung
- 32: Positionsmarke
- 33: Mechatronikeinheit
- 34: Wandung
- 35: Druckmittelleitung
- 36: Kabel
- 37: Verbindungssteg
- 38: Verbindungssteg
- 39: Druckmittelkanal

## Patentansprüche

1. Zwischenradanordnung (1) für ein Kraftfahrzeug, mit einem ersten Gehäuse (2), mit einem Rückwärtsgangzwischenrad (7) und mit einem Zwischenradhalter (8), wobei der Zwischenradhalter (8) mit dem ersten Gehäuse (2) verbunden ist, wobei das Rückwärtsgangzwischenrad (7) zwischen dem ersten Gehäuse (2) und dem Zwischenradhalter (8) angeordnet ist, und wobei eine Schaltschiene (14) zum Betätigen einer Synchroneinrichtung vorgesehen ist, **dadurch gekennzeichnet, dass** der Zwischenradhalter (8) einen ersten Schaltzylinder (12) aufweist, wobei in dem ersten Schaltzylinder (12) ein erster Schaltkolben (13) verschiebbar angeordnet ist, und wobei der Schaltkolben (13) mit der Schaltschiene (14) zusammenwirkt.

2. Zwischenradanordnung nach Anspruch 1, **dadurch gekennzeichnet, dass** der erste Schaltkolben (13) Teil eines Schaltkolbenpaares (15) ist, wobei das Schaltkolbenpaar (15) der Schaltschiene (14) zugeordnet ist, wobei in dem ersten Gehäuse (2) ein zweiter Schaltzylinder (16) ausgebildet ist, wobei dem Schaltkolbenpaar (15) ein zweiter Schaltkolben (17) zugeordnet ist, und wobei der zweite Schaltkolben (17) in dem zweiten Schaltzylinder (16) verschiebbar angeordnet ist.

3. Zwischenradanordnung nach Anspruch 2, **dadurch gekennzeichnet, dass** die Schaltkolben (13, 17) an den Enden der Schaltschiene (14) angeordnet sind.

4. Zwischenradanordnung nach einem der vorstehenden Ansprüche, **dadurch gekennzeichnet, dass** der Zwischenradhalter (8) einen ersten Druckmittelkanal (18) aufweist, wobei der erste Druckmittelkanal (18) in den ersten Schaltzylinder (12) mündet.

5. Zwischenradanordnung nach einem der Ansprüche 2 bis 4, **dadurch gekennzeichnet, dass** der Zwischenradhalter (8) mindestens einen zweiten Druckmittelkanal (19) aufweist, wobei der zweite Druckmittelkanal (19) über eine Druckmittelleitung (20) mit einer Druckmittelzufuhr (21) verbunden ist, wobei der zweite Druckmittelkanal (19) zur Druckmittelversorgung des zweiten Schaltzylinders (16) dient.

6. Zwischenradanordnung nach einem der vorstehenden Ansprüche, **dadurch gekennzeichnet, dass** ein zweites Gehäuse (4) vorgesehen ist, wobei das erste Gehäuse (2) mit dem zweiten Gehäuse (4) verbunden ist, wobei der Zwischenradhalter (8) in einem Innenraum (6) zwischen dem ersten und zweiten Gehäuse (2, 4) angeordnet ist.

7. Zwischenradanordnung nach Anspruch 6, **dadurch gekennzeichnet, dass** am ersten und zweiten Gehäuse (2, 4) weitere, sich gegenüberliegende Schaltzylinder (22, 23) ausgebildet sind, wobei in den Schaltzylindern (22, 23) weitere Schaltkolben (24, 25) von mindestens einem weiteren Schaltkolbenpaar (26) verschiebbar angeordnet sind.

8. Zwischenradanordnung nach Anspruch 6 oder 7, **dadurch gekennzeichnet, dass** in dem zweiten Gehäuse (4) ein weiterer Druckmittelkanal (28) ausgebildet ist, wobei der weitere Druckmittelkanal (28) über eine Druckmittelleitung (29) mit dem ersten Druckmittelkanal (18) im Zwischenradhalter (8) verbunden ist.

9. Zwischenradanordnung nach einem der vorstehenden Ansprüche, **dadurch gekennzeichnet, dass** das erste Gehäuse (2) als Kupplungsgehäuse (3) ausgebildet ist, wobei der Zwischenradhalter (8) mittels einer Schraubverbindung mit dem Kupplungsgehäuse (3) verbunden ist, wobei die Schraubverbindung sich koaxial zum Rückwärtsgangzwischenrad (7) erstreckt.

10. Zwischenradanordnung nach einem der vorstehenden Ansprüche, **dadurch gekennzeichnet, dass** zwischen dem ersten Gehäuse (2) und dem Zwischenradhalter (8) eine Lagesensoreinrichtung (31) zur Lagebestimmung der Schaltschiene (14) angeordnet ist.

11. Zwischenradanordnung nach einem der vorstehenden Ansprüche, **dadurch gekennzeichnet, dass** an dem Zwischenradhalter (8) eine Arretierungseinrichtung für eine der Schaltschienen (14) angebracht oder ausgebildet ist.

## Claims

1. Idler gear arrangement (1) for a motor vehicle, having a first housing (2), having a reverse idler gear (7) and having an idler gear holder (8), wherein the idler gear holder (8) is connected to the first housing (2), wherein the reverse idler gear (7) is arranged between the first housing (2) and the idler gear holder (8), and wherein a gear shift rail (14) is provided for the activation of a synchronizer, **characterized in that** the idler gear holder (8) has a first shift cylinder (12), wherein a first shift piston (13) is displaceably arranged in the first shift cylinder (12), and wherein the shift piston (13) works together with the gear shift rail (14).

2. Idler gear arrangement according to claim 1, **characterized in that** the first shift piston (13) is part of a pair of shift pistons (15), wherein the pair of shift pistons (15) is associated with the gear shift rail (14), wherein a second shift cylinder (16) is formed in the first housing (2), wherein the pair of shift pistons (15) is associated with a second shift piston (17), and wherein the second shift piston (17) is displaceably arranged in the second shift cylinder (16).

3. Idler gear arrangement according to claim 2, **characterized in that** the shift pistons (13, 17) are arranged at the ends of the gear shift rail (14).

4. Idler gear arrangement according to any of the preceding claims, **characterized in that** the idler gear holder (8) has a first pressurizing medium channel (18), wherein the first pressurizing medium channel (18) opens into the first shift cylinder (12).

5. Idler gear arrangement according to any of claims 2 to 4, **characterized in that** the idler gear holder (8) has at least one second pressurizing medium channel (19), wherein the second pressurizing medium channel (19) is connected to a pressurizing medium supply (21) via a pressurizing medium line (20), wherein the second pressurizing medium channel (19) serves to supply the second shift cylinder (16) with the pressurizing medium.

6. Idler gear arrangement according to any of the preceding claims, **characterized in that** a second housing (4) is provided, wherein the first housing (2) is connected to the second housing (4), wherein the idler gear holder (8) is arranged in an internal space (6) between the first and second housings (2, 4).

7. Idler gear arrangement according to claim 6, **characterized in that** additional opposing shift cylinders (22, 23) are formed on the first and second housings (2, 4), wherein additional shift pistons (24, 25) from at least one additional pair of shift pistons (26) are displaceably arranged in the shift cylinders (22, 23).

8. Idler gear arrangement according to claim 6 or 7, **characterized in that** an additional pressurizing medium channel (28) is formed in the second housing (4), wherein the additional pressurizing medium channel (28) is connected to the first pressurizing medium channel (18) in the idler gear holder (8) via a pressurizing medium line (29).

9. Idler gear arrangement according to any of the preceding claims, **characterized in that** the first housing (2) is designed as a clutch housing (3), wherein the idler gear holder (8) is connected to the clutch housing (3) by means of a screw connection, wherein the screw connection extends coaxially with respect to the reverse idler gear (7).

10. Idler gear arrangement according to any of the preceding claims, **characterized in that** a position sensor device (31) for determining the position of the gear shift rail (14) is arranged between the first housing (2) and the idler gear holder (8).

11. Idler gear arrangement according to any of the preceding claims, **characterized in that** a locking device for one of the gear shift rails (14) is attached to or formed on the idler gear holder (8).

## Revendications

1. Ensemble de pignon intermédiaire (1) pour un véhicule automobile, comprenant un premier carter (2), comprenant un pignon intermédiaire de marche arrière (7) et comprenant un porte-pignon intermédiaire (8), le porte-pignon intermédiaire (8) étant relié au premier carter (2), le pignon intermédiaire de marche arrière (7) étant disposé entre le premier carter (2) et le porte-pignon intermédiaire (8) et une tige de changement de rapport (14) étant prévue pour l'actionnement d'un dispositif de synchronisation, **caractérisé en ce que** le porte-pignon intermédiaire (8) présente un premier vérin de changement de rapport (12), un premier piston de changement de rapport (13) étant disposé de façon coulissante dans le premier vérin de changement de rapport (12) et le piston de changement de rapport (13) coopérant avec la tige de changement de rapport (14).

2. Ensemble de pignon intermédiaire selon la revendication 1, **caractérisé en ce que** le premier piston de changement de rapport (13) fait partie d'une paire de pistons de changement de rapport (15), la paire de pistons de changement de rapport (15) étant associée à la tige de changement de rapport (14), un deuxième vérin de changement de rapport (16) étant formé dans le premier carter (2), un deuxième piston de changement de rapport (17) étant associé à la paire de pistons de changement de rapport (15) et le deuxième piston de changement de rapport (17) étant disposé de façon coulissante dans le deuxième vérin de changement de rapport (16).

3. Ensemble de pignon intermédiaire selon la revendication 2, **caractérisé en ce que** les pistons de changement de rapport (13, 17) sont disposés aux extrémités de la tige de changement de rapport (14).

4. Ensemble de pignon intermédiaire selon l'une quelconque des revendications précédentes, **caractérisé en ce que** le porte-pignon intermédiaire (8) présente un premier canal de fluide sous pression (18), le premier canal de fluide sous pression (18) débouchant dans le premier vérin de changement de rapport (12).

5. Ensemble de pignon intermédiaire selon l'une quelconque des revendications 2 à 4, **caractérisé en ce que** le porte-pignon intermédiaire (8) présente au moins un deuxième canal de fluide sous pression (19), le deuxième canal de fluide sous pression (19) étant relié via une conduite de fluide sous pression (20) à une alimentation en fluide sous pression (21), le deuxième canal de fluide sous pression (19) servant à l'alimentation en fluide sous pression du deuxième vérin de changement de rapport (16).

6. Ensemble de pignon intermédiaire selon l'une quelconque des revendications précédentes, **caractérisé en ce qu'**un deuxième carter (4) est prévu, le premier carter (2) étant relié au deuxième carter (4), le porte-pignon intermédiaire (8) étant disposé dans un espace intérieur (6) entre le premier et le deuxième carter (2, 4).

7. Ensemble de pignon intermédiaire selon la revendication 6, **caractérisé en ce que** d'autres vérins de changement de rapport (22, 23) opposés sont formés au niveau du premier et du deuxième carter (2, 4), d'autres pistons de changement de rapport (24, 25) d'au moins une autre paire de vérins de changement de rapport (26) étant disposés de façon coulissante dans les vérins de changement de rapport (22, 23).

8. Ensemble de pignon intermédiaire selon la revendication 6 ou 7, **caractérisé en ce qu'**un autre canal de fluide sous pression (28) est formé dans le deuxième carter (4), l'autre canal de fluide sous pression (28) étant relié via une conduite de fluide sous pression (29) au premier canal de fluide sous pression (18) dans le porte-pignon intermédiaire (8).

9. Ensemble de pignon intermédiaire selon l'une quelconque des revendications précédentes, **caractérisé en ce que** le premier carter (2) est conçu comme un carter d'embrayage (3), le porte-pignon intermédiaire (8) étant relié au carter d'embrayage (3) au moyen d'un raccord vissé, le raccord vissé s'étendant coaxialement par rapport au pignon intermédiaire de marche arrière (7).

10. Ensemble de pignon intermédiaire selon l'une quelconque des revendications précédentes, **caractérisé en ce qu'**un dispositif de capteur de position (31) est disposé entre le premier carter (2) et le porte-pignon intermédiaire (8) pour la détermination de position de la tige de changement de rapport (14).

11. Ensemble de pignon intermédiaire selon l'une quelconque des revendications précédentes, **caractérisé en ce qu'**un dispositif d'arrêt pour une des tiges de changement de rapport (14) est disposé ou conçu sur le porte-pignon intermédiaire (8).
